# EUROPEAN PATENT APPLICATION

(11) **EP 4 844 100 A1**
(43) Date of publication of application: **25.11.2026**
(21) Application number: 26179921.7
(22) Date of filing: 20.05.2026
(51) Int. Cl.: C23C 24/08, B22F 5/04, C23C 24/04, F01D 5/00, F01D 5/12

(54) **ALUMINUM FAN BLADE WITH COLD SPRAYED PLATFORM**

(30) Priority: 21.05.2025 US 202563809613 P
(71) Applicant: RTX Corporation, Farmington, CT 06032 (US)
(72) Inventor: MORAIS, Olivia, West Hartford, 06107 (US); REICHELDERFER, Victoria, Colchester, 06415 (US); SIOPIS, Matthew, West Hartford, 06107 (US)
(74) Representative: Dehns

(57) **Abstract**

A method for making a fan blade having a platform, includes forging a fan blade (26) from a blank (20) to produce a fan blade (26) extending along a blade axis (A) from a root (28) to a blade tip (30); and applying a platform (36) to the fan blade (26; 32) by spraying an alloy spray material to build a platform (36) on the fan blade (26; 36) and produce the fan blade (32) having a platform (36). The spraying can be a cold spray application. The resulting fan blade (32) has desirable properties in the platform (36) and areas adjacent to the platform (36).

## Description

### FIELD

The present disclosure relates to manufacture of fan blades and particularly to the manufacture of fan blades and platforms thereof.

### BACKGROUND

Gas turbine engines and other industrial machines utilize various components and assemblies that have fan blades assembled into a fan, for example for turbines or compressors and the like as one non-limiting example. The alloys used for aluminum fan blades are complex and require precise processing strains and temperatures to achieve optimal properties. Forging a blade with an integral platform is desirable from a manufacturability perspective as the platform is forged at the same time or in the same general step as the fan blade. However, this creates numerous challenges microstructurally and results in potentially compromised properties in the platform and areas adjacent to it. Forging a blade without an integral platform requires numerous additional manufacturing steps, so while the microstructural challenges may be avoided, significant time, and steps, can be added on the back end of production.

### SUMMARY OF THE DISCLOSURE

In one aspect, the present disclosure is directed to a method for making a fan blade having a platform, comprising: forging a fan blade from a blank to produce a fan blade extending along a blade axis from a root to a blade tip; and applying a platform to the fan blade by spraying an alloy spray material to build a platform on the fan blade and produce the fan blade having a platform.

In a non-limiting configuration, the spraying comprises cold spraying a cold spray material.

In another non-limiting configuration, the cold spraying is carried out with the following parameters: gas: nitrogen or helium; pressure: 400-1000 psi (2.76-6.89 MPa); temperature: 300 - 500°C; and powder particle size distribution range: 20 - 75 microns.

In still another non-limiting configuration the cold spray gas is nitrogen, and the method further comprises a post heat treatment at a temperature of 300-350°F (149-177°C).

In a further non-limiting configuration, the post heat treatment is carried out for between 1-10 hours.

In a still further non-limiting configuration, the method further comprises the step of machining the fan blade having the platform to produce a final fan blade.

In another non-limiting configuration, the blank comprises an aluminum alloy, and the cold spray material comprises an aluminum alloy.

In still another non-limiting configuration, the aluminum alloy is selected from the group comprising aluminum-copper alloys, aluminum-copper-zinc alloys and combinations thereof.

In a further non-limiting configuration, the aluminum alloy of the blank is the same as the aluminum alloy of the cold spray material.

In a still further non-limiting configuration, the aluminum alloy of the blank is different from the aluminum alloy of the cold spray material.

In another non-limiting configuration, the applying step results in a fan blade having an integral platform.

In still another non-limiting configuration, the method further comprises a heat treatment after the applying step.

In a further non-limiting configuration, the heat treatment is carried out at a temperature of between about 300 and 350°C for a period of time of between about 1 and about 10 hours.

In a still further non-limiting configuration, the applying step comprises a plurality of cold spray applications until a desired platform structure is reached.

In another non-limiting configuration, the platform extends laterally away from the axis.

In still another non-limiting configuration, the machining step adds surface features to the fan blade.

In another aspect, a fan blade with integral platform is disclosed, wherein the fan blade extends from a blade root along a blade axis to a blade tip, wherein the platform extends laterally away from the blade axis, and wherein a microstructure at a transition from the fan blade to the platform has a recrystallization of less than about 20%.

In a non-limiting configuration, the platform has large grains, and at least 70% of the large grains are elongated in a spanwise direction of the fan blade.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a fan blade with platform as a non-limiting example of a fan blade that can be made according to the disclosed method.
FIG. 2 schematically illustrates an embodiment of a method for making a fan blade; and
FIG. 3 schematically illustrates a cold spray step for applying a platform to a forged fan blade.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

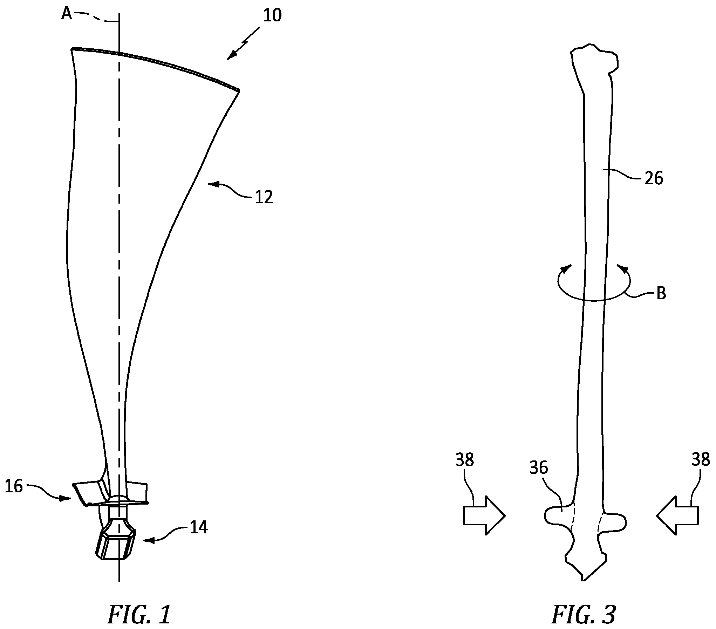

Fan blades such as those used in components of gas turbine engines and the like can be made through various methods. FIG. 1 shows one non-limiting example of such a fan blade 10. Fan blade 10 has a blade portion 12 and a root portion 14 that extend generally along a blade axis A. A platform 16 extends generally laterally with respect to axis A. In a typical fan assembly, root portion 14 is secured into a rotor (not shown) while blade portion 12 extends radially outwardly to define, collectively with other fan blades 10, the fan. Platform 16 serves to seal a space within a gas turbine engine containing root portion 14 from a space containing blade portion 12 as these spaces can contain very different conditions and it is desired to prevent leakage from one space to the other. Platform 16 serves to prevent such leakage, and also can provide further mechanical stability to the mounting of fan blade 10 in the rotor. Thus, platform 16 is a highly functional portion of fan blade 10.

Fan blade 10 can be forged from a blank of material, and in some cases the platform is forged along with the blade from the blank of material. It has been found, however, that forging a blade in this manner, including the platform, subjects the material of the platform and near the platform to stresses that cause issues microstructurally and compromise the needed properties of the material in the platform area. Thus, even though this method for making the blade and platform may be desirable from a manufacturing standpoint, the resulting fan blade has diminished properties in the platform area. Alternative methods involve forging the blade without a platform and then mechanically and/or separately attaching a platform to the blade. However, this adds numerous steps and complexity to the manufacturing process, and also is not desirable.

In one non-limiting embodiment, the fan blade is forged without a platform, and the platform is then applied to the forged fan blade using a spray technique such as cold spray, thermal spray or similar techniques, and the fan blade with cold sprayed platform can then be heat treated and machined to produce the final fan blade with platform that does not require the additional mechanical mounting steps as discussed above, and which also has not subjected the platform and nearby regions to the stress associated with forging the platform such that the fan blade is made by a method that is an improvement of forging the platform or forging without the platform and then mechanically applying the platform.

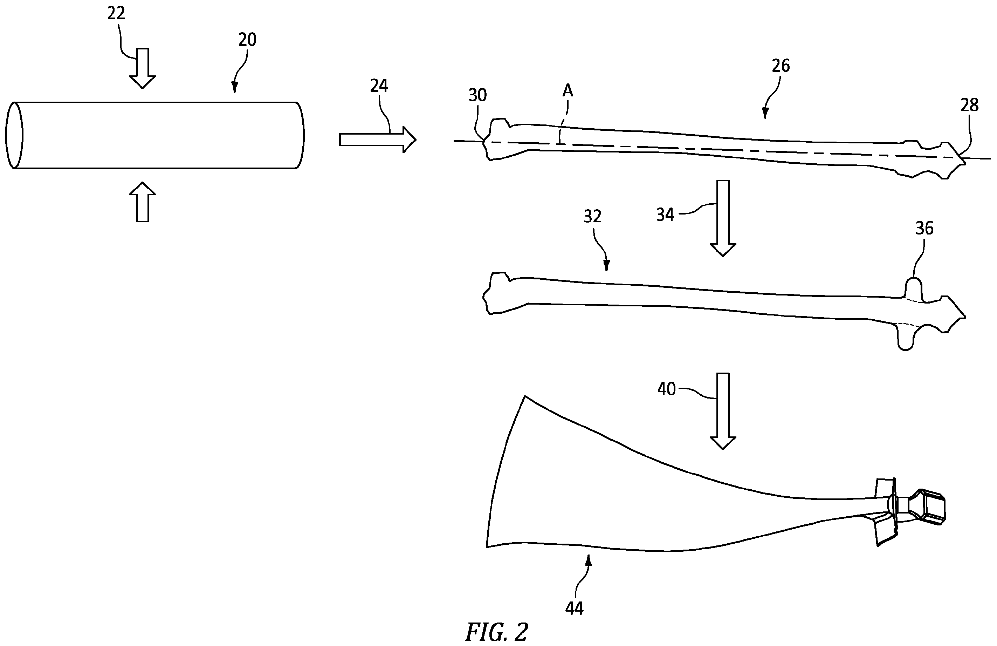

Referring now to FIG. 2, a method according to this embodiment will be discussed. FIG. 2 shows a blank 20 of a suitable material from which the fan blade will be forged, for example an aluminum alloy such as high strength aluminum alloys including but not limited to aluminum-copper and aluminum-copper-zinc alloys. As shown, dies 22 and a typical forging process 24 result in a fan blade structure 26 which extends from a root portion 28 at one end to a fan blade tip 30 at the other end. Fan blade structure 26 extends along axis A from root portion 28 to fan blade tip 30. This forged fan blade structure 26, without a platform, is then passed to a cold spray step 34 wherein cold spray of a suitable cold spray material, such as for example a cold spray aluminum alloy, is used to build platform 36 on fan blade structure 26 to produce a fan blade structure 32 that now has platform 36 and which has not yet been machined into final form. In the drawings, platform 36 in this stage is shown as being divided from blade structure 26 by a broken line. This is done simply for purposes of showing the added platform 36. The cold spray application of platform 36 to fan blade structure 26 is done in such a manner that the crystalline and microcrystalline structure is merged, and that the platform and blade are merged into a single unitary microcrystalline structure as is further discussed below.

It should be appreciated that there are other spray methods by which the platform could be applied, such as for example thermal spray and the like. However, cold spray as is discussed herein is preferable over other spray methods as it does not involve a substantially increased temperature at the time of preparation of the platform. Cold spray processing temperatures are relatively low when compared to traditional thermal spray processes, and these low temperatures can help reduce excessive temperatures in the fan blade during the cold spray process. This results in a more stable crystal structure at the platform and junction from fan blade to the platform as is desired.

In some instances, additional part cooling may be desirable and can be applied or directed on the fan blade in the vicinity of the cold spray application to further reduce part temperatures to stay within acceptable limits. Further, when other spray methods are used within the presently disclosed method for making a fan blade 10 with integrated platform 36, additional part cooling after the cold spray application can be desired.

In the cold spray (or other) process, a number of passes can be made at the workpiece or unit to add layers of cold spray material until they are sufficient to define the platform as desired. Because the cold spray application does not involve excessive temperatures, the microcrystalline structure of the blade and the platform are left in the intended state, which provides for the desired mechanical properties of same.

Once the cold spray step 34 is completed, the resulting fan blade with platform, generally referred to at 32, can then be passed to a machining step 40 in which various machining is conducted using various machining tools to provide the desired final shape of fan blade 10. For example, in the embodiment of FIG. 2, machining is used to create the shape and contour of the fan blade, which is illustrated at 44. The machining and features of the final blade are all as would be known to a person having ordinary skill in the art and are not

### further discussed herein.

In another non-limiting configuration, there can be an optional heat treatment or post heat treatment step after the cold spray step 34. This additional optional step can be a heat treatment step, which could involve application of temperatures between about 300 and 350°F (149-177 °C), for about 1-10 hours. This step can be conducted before machining. The heat treatment serves to cure and bond the sprayed material to the forged blade structure to produce a microcrystalline structure at a junction between the forged blade structure and the platform that appears to be, and functionally acts as, integral or unitary. This results in a fan blade with platform which can be manufactured efficiently and which has desirable properties, for example desirable microcrystalline structure, through the platform and surrounding areas. In additional to improving the bond between the cold spray platform and the forged blade structure, the heat treatment may also improve the ductility of the cold spray platform by relieving stresses imparted during the process and completing the bonding process between cold spray powder splats.

Turning to FIG. 3, the spray application of the platform is further illustrated. Forged fan blade structure 26 is shown in a vertical position, which is one position in which the spray or cold spray can be conducted. Cold spray is schematically illustrated at arrows 38. Numerous approaches could be used, all as would be known to a person having skill in the art, in order to cold spray the cold spray material in order to form platform 36 from splats of cold spray material. In one configuration, blade structure 26 could be rotated relative to a fixed cold spray nozzle, as shown at arrows B, or alternatively the cold spray nozzle could be moved relative to a substantially stationary fan blade structure 26, in either way such that the desired platform is built onto the fan blade structure 26 using as many passes as may be needed.

In another non-limiting configuration, cold spray manufacture of platform 32 can be done first on one side of fan blade structure 26 and then on the other side. Numerous different approaches can be taken to spray apply, especially to cold spray apply, platform 36 to fan blade structure 26. In this regard, it should be noted that although other spray methods such as thermal spray can advantageously be used in connection with the disclosed method, cold spray is particularly useful because it does not significantly increase the temperature of the fan blade structure during application. As set forth above, cold spray processing temperatures are relatively low when compared to traditional thermal spray processes, and this can help reduce excessive temperatures in the fan blade during the cold spray process. Additional part cooling may be useful or required and can be applied or directed on the fan blade in the vicinity of the cold spray application to further reduce part temperatures within acceptable limits, again as needed and/or desired.

It should be appreciated that the method as disclosed herein is a novel configuration of an aluminum fan blade forging with an integral platform, in which the platform is cold spayed on after the forging process but before machining. This mitigates issues with both microstructure and producibility that are associated with conventional platform production techniques.

The present disclosure leverages cold spray technology to combine traditional and additive manufacturing techniques, and thereby creates a path to solve challenges in aluminum engine hardware, which can result in increased use of aluminum alloys in the engine and contributing to significant cost and weight savings.

The alloys used for aluminum fan blades can be complex and can require precise processing strains and temperatures to achieve optimal properties. The method as disclosed herein solves both problems in that the blade is forged essentially without a platform, and before machining, the platform is applied via cold-spray. Following this method, the platform is still integral to the blade, avoiding producibility issues, but it is not forged, avoiding microstructural issues.

These microstructural issues can be caused by high forging strains which result from forging a platform along with the fan blade, which can result in significant recrystallization in the platform and the areas adjacent to it. This compromised microstructure can potentially drastically reduce properties in and near the platform relative to material in airfoil region.

Strain in a component can be measured or evaluated in many ways, one of which is through the use of forging strain models, which can clearly show areas of elevated strain, particularly in the platform area. Of course, other methods of measuring the strain can also be utilized. In any event, with respect to forged fan blades, specific areas of potential strain include the platform when the platform is forged along with the blade.

The cold spray application as disclosed herein can be conducted using any suitable cold spray material, for example aluminum alloys which can be the same or different from the aluminum alloy of the fan blade itself. So long as the stresses and strains of forging are not applied also to the material of the platform, the property requirements of the platform itself are not as strict, and potentially some cost savings could be obtained by using more cost-effective alloys for the cold spray of the platform. Cold spray processing temperatures are relatively low when compared to traditional thermal spray processes. This can help reduce excessive temperatures in the fan blade during the application of the platform, in this case with the cold spray process. Additional part cooling may be required and can be applied or directed on the fan blade in the vicinity of the cold spray application to further reduce part temperatures within acceptable limits, if necessary.

Within the disclosed embodiments, suitable cold spray parameters can include the following:
Gas: nitrogen or helium;
Pressure: 400-1000 psi (2.76-6.89 MPa);
Temperature: 300 - 500°C;
Powder particle size distribution range: 20 - 75 microns.

Post heat treatment, for example with nitrogen sprays: 300-350 °F (149-177 °C).

Duration of post heat treatment: approximately 1-10 hrs.

An aluminum fan blade forging with a cold sprayed platform has drastically improved microstructure over fan blade forgings with integral platform. This is because, among other things, excessive recrystallization and loss of texture are avoided. Thus, the resulting fan blade can have minimal recrystallization in the areas adjacent to the platform, and maintain as many large grains elongated in the spanwise direction of the blade as possible. For example, recrystallization can be maintained at or below about 20%, and at least about 70% of the large grains are elongated in the spanwise direction of the blade.

Thermomechanical processing as disclosed herein is much more straightforward than conventional methods. Further, improved microstructure in the aluminum fan blade resulting from use of the disclosed method can result in drastic improvements in impact capability - a property that is critical for proper engine function and safety, for example in the event of a bird strike.

As set forth above, an aluminum fan blade forging with a cold sprayed platform has significantly improved manufacturability over fan blade forgings without an integral platform. The platform also does not have to be installed/assembled separately later in the process.

An aluminum fan blade forging with a cold sprayed platform solves issues with microstructure-processing relationships in complex aluminum alloys, creating a pathway for further uses of aluminum alloys in the engine, again which contributes to significant potential savings in cost and weight.

An aluminum fan blade forging with a cold sprayed platform can also contribute to significant savings in cost, as capability and producibility issues with current fan blade configurations has cost hundreds of thousands of dollars in recent years and the problem remains.

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. A method for making a fan blade (10; 12) having a platform (16), comprising:
forging a fan blade (26) from a blank (20) to produce a fan blade (26) extending along a blade axis (A) from a root (28) to a blade tip (30); and
applying a platform (36) to the fan blade (26) by spraying an alloy spray material to build a platform (36) on the fan blade (26) and produce the fan blade (32) having a platform (36).

2. The method of claim 1, wherein the spraying comprises cold spraying a cold spray material.

3. The method of claim 2, wherein the cold spraying is carried out with the following parameters:
gas: nitrogen or helium;
pressure: 400-1000 psi (2.76-6.89 MPa);
temperature: 300 - 500 °C;
powder particle size distribution range: 20 - 75 microns.

4. The method of claim 3, wherein the gas is nitrogen, and further comprising a post heat treatment at a temperature of 300-350F (149-177 °C)_, optionally wherein the post heat treatment is carried out for between 1-10 hours.

5. The method of any preceding claim, further comprising the step of machining the fan blade (32) having the platform (36) to produce a final fan blade (10; 12).

6. The method of claim 2 or any of claims 3 to 5 as dependent on claim 2, wherein the blank (20) comprises an aluminum alloy, and wherein the cold spray material comprises an aluminum alloy, optionally wherein the aluminum alloy is selected from the group comprising aluminum-copper alloys, aluminum-copper-zinc alloys and combinations thereof.

7. The method of claim 6, wherein the aluminum alloy of the blank (20) is the same as the aluminum alloy of the cold spray material.

8. The method of claim 6, wherein the aluminum alloy of the blank (20) is different from the aluminum alloy of the cold spray material.

9. The method of any preceding claim, wherein the applying step results in a fan blade (32) having an integral platform (36).

10. The method of any preceding claim, further comprising a heat treatment after the applying step, optionally wherein the heat treatment is carried out at a temperature of between about 300 and 350°F (149 and 177°C) for a period of time of between about 1 and about 10 hours.

11. The method of claim 2 or any of claims 3 to 10 as dependent on claim 2, wherein the applying step comprises a plurality of cold spray applications until a desired platform structure is reached.

12. The method of any preceding claim, wherein the platform (16; 36) extends laterally away from the axis (A).

13. The method of claim 5 or any of claims 6 to 12 as dependent on claim 5, wherein the machining step adds surface features to the fan blade (32).

14. A fan blade (10; 12) with integral platform (16), wherein the fan blade (10; 12) extends from a blade root (14) along a blade axis (A) to a blade tip, wherein the platform (16) extends laterally away from the blade axis (A), and wherein a microstructure at a transition from the fan blade (10; 12) to the platform (16) has a recrystallization of less than about 20%.

15. The fan blade of claim 14, wherein the platform (16) has large grains, and at least 70% of the large grains are elongated in a spanwise direction of the fan blade (10; 12).
